# FASCICULE DE BREVET EUROPEEN

(11) **EP 3 906 278 B1**
(45) Date de publication et mention de la délivrance du brevet: **12.03.2025**
(21) Numéro de dépôt: 19850789.9
(22) Date de dépôt: 27.12.2019
(51) Int. Cl.: C08K 5/19, C08K 5/5337, C08L 65/00, H01B 3/40, H02K 3/30, H02K 3/40

(54) **MATÉRIAU POUR L'ISOLATION ÉLECTRIQUE ET PROCÉDÉ DE FABRICATION**
ELEKTRISCHES ISOLIERMATERIAL UND HERSTELLUNGSVERFAHREN
ELECTRICAL INSULATION MATERIAL AND MANUFACTURING PROCESS

(30) Priorité: 31.12.2018 FR 1874421
(43) Date de publication de la demande: 10.11.2021
(73) Titulaire: Supergrid Institute, 69100 Villeurbanne (FR); Centre National de la Recherche Scientifique - CNRS, 75794 Paris Cedex 16 (FR); Université Claude Bernard Lyon 1, 69100 Villeurbanne (FR); Institut National des Sciences Appliquees de Lyon (Insa Lyon), 69100 Villeurbanne (FR); Université Jean Monnet Saint-Étienne, 42100 Saint-Étienne (FR)
(72) Inventeur: LEFORT, Thibaut, 69100 VILLEURBANNE (FR); BACHELLERIE, Damien, 69003 LYON (FR); PRUVOST, Sébastien, 01600 TREVOUX (FR); DUCHET, Jannick, 01600 SAINT EUPHEMIE (FR); LIVI, Sébastien, 69100 VILLEURBANNE (FR)
(74) Mandataire: Cabinet Beau de Loménie
(86) Numéro de dépôt international: PCT/FR2019/053305
(87) Numéro de publication internationale: WO 2020/141280

(56) Documents cités:
- WO-A1-2008/009560
- WO-A1-2018/000125
- WO-A1-98/32138
- CN-A- 102 964 778
- US-A1- 2009 030 158

## Description

La présente invention concerne un matériau composite d'isolation électrique, pouvant notamment être utilisé pour réaliser des supports isolants pour conducteurs électriques dans des appareillages électriques à haute tension, comme les postes sous enveloppe métallique, désignés couramment par l'acronyme PSEM, et soumis à une haute tension à courant continu.

L'intégration des énergies renouvelables au réseau électrique implique l'utilisation d'une technologie haute tension à courant continu (HVDC pour « High Voltage Direct Current »), afin de limiter les pertes sur de longues distances reliant les lieux de production (par exemple, les éoliennes offshore) aux lieux de consommation. Or, l'ensemble du réseau actuel fonctionne sous haute tension à courant alternatif (HVAC pour « High Voltage Alternating Current »). Ces deux technologies n'induisent pas les mêmes phénomènes. Le réseau et ses composants doivent donc être repensés et développés pour le HVDC.

Classiquement, un poste électrique sous enveloppe métallique est constitué d'un conducteur électrique haute tension maintenu au centre d'une enveloppe métallique à l'aide de supports isolants électriques, tels que des entretoises ou « spacers » en anglais. L'enveloppe externe est mise à la terre et l'isolation électrique de chaque phase par rapport à la masse est assurée par un milieu isolant à forte rigidité diélectrique, typiquement SF₆. Ces postes sont très compacts et peuvent être installés à l'intérieur ou à l'extérieur des bâtiments.

Afin d'être utilisé en tant qu'isolant électrique, le matériau des supports isolants doit avoir une faible porosité, une haute rigidité diélectrique, une faible permittivité diélectrique et un faible coefficient d'expansion thermique. De plus, lors de leur utilisation, les supports isolants électriques sont soumis à une contrainte électrique permanente pouvant provoquer l'apparition de points chauds localement. Il est donc important que le matériau des supports isolants ait également une conductivité thermique élevée, et ce tout au long de la durée de vie des supports. De plus, les phénomènes d'accumulation de charges électriques font partie des nouvelles problématiques imposées par le HVDC par rapport au HVAC. En effet, l'application d'une tension continue provoque une accumulation de charges électriques en surface et en volume du support isolant, pouvant provoquer à terme l'apparition d'arcs électriques et donc une dégradation dangereuse des appareils. Ce phénomène est aggravé lorsqu'un gradient de température apparait entre le conducteur et l'enveloppe métallique.

Généralement, les supports isolants électriques sont réalisés en un matériau composite, i.e. en un assemblage d'au moins deux composants non miscibles. Typiquement, les supports isolants sont composés d'une matrice organique dans laquelle sont dispersées une ou plusieurs charges. La matrice est un matériau isolant électrique, par exemple formé par la réticulation d'un système réactif de co-monomères, dont l'un peut éventuellement être un durcisseur. Les charges peuvent être de type organique ou inorganique, micrométrique ou nanométrique, et de différentes géométries, à facteurs de forme variables. D'autres additifs peuvent être inclus dans cette matrice, comme des diluants ou des plastifiants par exemple. De tels matériaux composites sont par exemple décrits dans les demandes de brevet WO 98/32138 et WO 2008/009560.

Afin de palier à l'accumulation de charges électriques en courant continu, il est nécessaire d'améliorer leur évacuation. Pour ce faire, différents axes de développement ont été envisagés.

Une première possibilité est de modifier la géométrie du support isolant électrique dans le but de contrôler certains phénomènes localisés. La composition du matériau constitutif du support isolant électrique est alors inchangée. Cependant, cette option consiste surtout à fortement augmenter les dimensions des supports isolants électriques, ce qui représente une empreinte au sol très grande. De plus, la tenue de telles pièces dans le temps est incertaine. De plus, cette possibilité est connue pour être de faible impact sur l'accumulation de charges. La géométrie des supports isolants joue principalement sur la résistance au claquage.

Une deuxième possibilité est de réaliser un traitement de surface sur le support isolant électrique. Dans ce cas, la composition du matériau constitutif de l'isolant électrique est inchangée et un traitement de surface permet de modifier ses propriétés uniquement en surface. Cette option impose une nouvelle étape de procédé. Même si, selon de récentes études, certains traitements de surface, telle que la fluoration par exemple, semblent apporter des résultats, les impacts de tels procédés sur la santé et sur l'environnement semblent être un réel désavantage.

Une troisième possibilité est de modifier la nature du matériau constitutif de l'isolant électrique. En effet, la modification et/ou la suppression et/ou l'ajout de certains composants permettent de modifier les propriétés du matériau d'isolation électrique. Cette dernière option présente l'avantage de pouvoir réaliser des supports de dimensions raisonnables. De plus, les propriétés du matériau sont modifiées non seulement en surface mais également dans l'ensemble du volume.

Cette dernière option étant plus avantageuse, les recherches se sont donc plus largement concentrées sur la modification de la composition du matériau d'isolation électrique. A ce titre, plusieurs voies ont été envisagées : modification de la matrice, modification des charges ou ajout d'un additif.

En ce qui concerne la matrice, les modifications peuvent porter sur sa nature chimique et sur son architecture. Cependant, toute modification de la matrice impose un lourd travail de recherche sur le matériau ainsi qu'une adaptation du procédé de fabrication du matériau composite d'isolation électrique.

En ce qui concerne les charges, l'emploi de charges conductrices carbonées, de charges inorganiques micro- ou nanométriques, ou de charges permettant, sous certaines conditions, d'obtenir une conductivité non linéaire en fonction du champ électrique (dites RFGM pour « Resistive Field Grading Materials ») a été envisagé. Les charges conductrices carbonées ont un très fort impact sur la conductivité, rendant l'optimisation de la conductivité très difficile, ce qui les rend difficilement utilisables d'un point de vue industriel. Les charges nanométriques sont complexes à disperser dans la matrice en raison de l'augmentation de la viscosité et de la nécessité de contrôler la dispersion des charges pour éviter la formation d'agrégats. De plus, les contraintes d'hygiène et de sécurité lors de leur utilisation sont lourdes en raison de la nécessité d'éviter leur dissémination dans l'air. Les charges RFGM sont également difficiles à disperser de manière optimale et leur mise en œuvre est difficilement reproductible.

II existe donc un besoin d'un matériau composite d'isolation électrique qui, non seulement, ait une faible porosité, une haute rigidité diélectrique, une faible permittivité diélectrique, un faible coefficient d'expansion thermique, une conductivité thermique élevée, une bonne résistance mécanique, une bonne résistance à l'érosion électrique et à la propagation interne des arcs électriques, mais également une conductivité électrique supérieure à celle des matériaux isolants haute tension usuels (en surface et en volume). En effet, une meilleure évacuation des charges électriques au cours du temps permet d'éviter leur accumulation. Avantageusement, la conductivité du matériau composite d'isolation électrique selon l'invention peut être ajustée selon la nature et les proportions des différents composants utilisés pour le fabriquer. Avantageusement, ce matériau composite d'isolation électrique est facile à fabriquer.

L'invention propose l'ajout d'un additif organique, inorganique ou hybride pour augmenter légèrement la conductivité électrique du matériau composite d'isolation électrique. Pour cela, l'additif doit permettre de trouver un équilibre entre conductivité améliorée pour éviter le phénomène d'accumulation de charges électriques, et isolation électrique qui est sa fonction première. En effet, l'ajout d'un additif trop conducteur ou moyennement conducteur en trop grande quantité transformera le matériau composite d'isolation électrique en un matériau conducteur, et sera de ce fait inexploitable. La Demanderesse a découvert que l'emploi de liquides ioniques, en des quantités adéquates, permettait de trouver un tel compromis, tout en conservant les propriétés requises pour un matériau composite d'isolation électrique utilisé en HVDC.

Les liquides ioniques sont des composés entièrement constitués d'ions (association de cations et d'anions) comme les sels fondus, mais se distinguent par une température de fusion inférieure à 100 °C. Les liquides ioniques ont des propriétés physico-chimiques particulières qui expliquent leur intérêt : stabilité thermique et chimique, température d'ébullition élevée et tension de vapeur négligeable (d'où une très faible volatilité), forte conductivité ionique (et donc bonne conductivité électrique). Il existe une grande variété de liquides ioniques. Les cations sont de nature organique et peuvent être de type ammonium, phosphonium, thiazolium ou sulfonium par exemple. Le choix des anions est également vaste : les anions peuvent être organiques (aluminates, alkylsulfates, alkylsulfonates, ou phosphinates par exemple) ou inorganiques (halogénures ou hexafluorophosphate par exemple).

L'emploi de liquides ioniques n'a pas été envisagé pour l'isolation électrique en raison de leurs propriétés conductrices d'électricité, qui va à l'encontre de l'objectif premier d'un isolant électrique. De plus, les liquides ioniques sont connus pour leurs propriétés plastifiantes, ce qui risque de nuire aux propriétés mécaniques des isolants notamment si des agents plastifiants sont présents.

Des compositions comprenant une résine époxy et des liquides ioniques, sans charges, ont été décrites dans les demandes de brevet US 2009/030158 et WO 2018/000125, mais pas leur emploi pour l'isolation électrique. Par ailleurs, une composition comprenant une résine époxy, 1-9% en masse de palygorskite et 1-9% en masse de liquide ionique, par rapport à la masse de résine époxy, a été décrite dans la demande CN 102 964 778, mais pas son emploi pour ses propriétés isolantes électriques. La palygorskite est un silicate, et est donc incompatible avec le SF₆ qui est classiquement utilisé comme isolant dans les PSEM et notamment avec ses sous-produits. De plus, le procédé de préparation comprend l'emploi de diluent et divers autres additifs, ainsi qu'un chauffage à 50-70 °C, ce qui limite les éventuelles propriétés d'isolation électrique du matériau final.

Dans ce contexte, l'invention concerne un matériau composite d'isolation électrique formé à partir de :
i) une matrice polyépoxyde de type cycloaliphatique ou de type diglycidyléther en une teneur inférieure à 40% en masse,
ii) de 20 à 75% en masse d'une ou plusieurs charges micrométriques et/ou mésométriques,
iii) de 0,1 à 20% en masse d'au moins un liquide ionique, les masses étant exprimées par rapport à la masse totale du matériau composite d'isolation électrique.

Dans le cadre de l'invention, une « matrice polyépoxyde » désigne un polymère époxyde réticulé.

Par « charge micrométrique », on entend des charges dont la plus grande dimension est comprise entre 2 micromètres et 100 micromètres.

Dans le cadre de l'invention, les dimensions sont des dimensions moyennes en nombre. Celles-ci peuvent être mesurées par l'emploi d'un logiciel de mesure couplé à un microscope, tel qu'un microscope électronique à balayage, MEB.

Par « charge mésométrique », on entend des charges dont la plus grande dimension est comprise entre 100 nanomètres et 2 micromètres.

Le matériau composite d'isolation électrique selon l'invention a une bonne tenue électrique, une bonne résistance mécanique, une bonne résistance à l'érosion électrique et à la propagation interne d'arcs électriques, et une conductivité électrique supérieure à celle des matériaux isolant usuels pour haute tension tout en conservant des propriétés d'isolation électrique. En effet, le choix des différents composants, et en particulier de la ou des charges et du ou des liquides ioniques, et leurs quantités respectives, a permis de trouver un compromis entre ces propriétés a priori antinomiques. Avantageusement, la conductivité électrique du matériau d'isolation électrique conforme à l'invention peut être ajustée grâce à la nature des charges et des liquides ioniques employés, et leurs quantités respectives. Le matériau d'isolation électrique selon l'invention a également une bonne conductivité thermique. Le matériau d'isolation électrique selon l'invention peut ainsi être employé en haute tension et à courant continu, et avantageusement sans nécessiter de surdimensionnement. La haute tension est définie par une valeur de tension supérieure à 50 000 volts en courant alternatif, et par une valeur de tension supérieure à 75 000 volts en courant continu.

Le matériau composite d'isolation électrique selon l'invention peut présenter en outre une ou plusieurs caractéristiques additionnelles suivantes :
- le ou les liquides ioniques sont de type ammonium, imidazolium, pyridinium ou phosphonium ;
- la teneur en liquide(s) ionique(s) va de 0,1 à 5% en masse, par rapport à la masse totale du matériau composite d'isolation électrique ;
- la ou les charges micrométriques et/ou mésométriques sont choisie(s) parmi BN, un polyimide, SiO₂, Al₂O₃, Al(OH)₃, CaO, MgO, CaCO₃, et TiO₂ ;
- la teneur en charge(s) micrométrique(s) et/ou mésométrique(s) va de 40 à 70% en masse, par rapport à la masse totale du matériau composite d'isolation électrique ;
- la matrice est une matrice polyépoxyde de type diglycidyléther, et de préférence une matrice polyépoxyde de type diglycidyléther de bisphénol A ;
- le matériau composite d'isolation électrique a une conductivité électrique volumique allant de 10⁻¹⁸ à 10⁻¹² S/m, de préférence d'environ 10⁻¹⁵ S/m, de préférence mesurée selon la norme ISO 62631-3 ;
- le matériau composite d'isolation électrique a une température de transition vitreuse Tg comprise entre 70 °C et 160 °C, de préférence comprise entre 100 °C et 130 °C ;
- le matériau composite d'isolation électrique a un module élastique supérieur à 5000 MPa, de préférence supérieur à 10000 MPa, de préférence mesuré selon la norme ISO 527
- le ratio massique matrice polyépoxyde /liquide(s) ionique(s) va de 2 à 20%, et de préférence de 4 à 10% ;
- le matériau composite d'isolation électrique se présente sous la forme d'un support isolant électriquement apte à maintenir un conducteur électrique dans un poste sous enveloppe métallique.

Dans le cadre de l'invention, la mesure de la température de transition vitreuse est effectuée en employant un calorimètre différentiel à balayage (DSC) Q10 de TA instrument. La mesure est effectuée en utilisant une rampe allant de 25°C à 175°C pour une Tg<150°C ou de 25°C à 250°C si la Tg est supérieure à 150°C avec une montée de 20°C/min. Deux rampes thermiques sont effectuées de manière successive afin de contrôler la valeur de la Tg. La valeur de Tg correspond au point de début de transition (onset).

Un autre objet de l'invention concerne un procédé de fabrication d'un matériau composite d'isolation électrique selon l'invention, qui comprend les étapes suivantes :
a) préparation d'un mélange réticulable comprenant un prépolymère époxyde de type cycloaliphatique ou de type diglycidyléther, d'une ou plusieurs charges micrométriques et/ou mésométriques, d'au moins un liquide ionique, et éventuellement d'un agent de réticulation distinct du ou des liquides ioniques,
b) introduction dudit mélange réticulable dans un moule, et
c) réticulation du mélange réticulable situé dans le moule.

Dans le cadre de l'invention, un « mélange réticulable » s'entend comme le mélange d'un prépolymère époxyde de type cycloaliphatique ou de type diglycicyléther, d'une ou plusieurs charges inorganiques micrométriques et/ou mésométriques, d'au moins un liquide ionique, éventuellement d'un agent de réticulation distinct du ou des liquides ioniques, et éventuellement de tout additif usuel connu dans l'état de l'art. Un tel mélange est avantageusement réticulé comme explicité ci-après.

Dans le cadre de l'invention, le « prépolymère époxyde » désigne un monomère époxyde non réticulé. Le prépolymère époxyde est transformé en matrice polyépoxyde par réticulation.

Dans le cadre de l'invention, on entend par « agent de réticulation » un agent (c'est-à-dire un composé chimique) capable de réagir chimiquement avec un prépolymère réticulable, et plus particulièrement le prépolymère époxyde utilisé dans le cadre de l'invention. Par exemple, l'agent de réticulation peut être un durcisseur activé, un mélange contenant un durcisseur et un amorceur, ou une combinaison d'un amorceur et d'un durcisseur.

Le procédé selon l'invention est facile de mise en œuvre, et conduit à un matériau composite d'isolation électrique ayant une bonne tenue électrique, une bonne résistance mécanique, une bonne résistance à l'érosion électrique et à la propagation d'arcs électriques, une bonne conductivité thermique et ayant une conductivité électrique supérieure à celle des isolants utilisés habituellement pour la haute tension.

Le procédé selon l'invention peut présenter en outre une ou plusieurs caractéristiques additionnelles suivantes :
- le mélange réticulable a une viscosité allant de 6000 mPa.s à 15000 mPa.s, de préférence de 10000 mPa.s à 12000 mPas, de préférence mesurée à 80 °C selon la norme ISO 12058 ;
- le mélange réticulable comprend un agent de réticulation distinct du ou des liquides ioniques choisi parmi un durcisseur activé, un mélange contenant un amorceur et un durcisseur, ou une combinaison d'un durcisseur et d'un amorceur, le durcisseur étant de préférence choisi parmi les durcisseurs de type amine ou anhydride ;
- le mélange réticulable ne comprend pas d'agent de réticulation distinct du ou des liquides ioniques ;
- la réticulation est réalisée par application d'un moyen de réticulation, tel que du chauffage ou des UV.

Dans le cadre de l'invention, un « moyen de réticulation » est un moyen physique permettant la réticulation du mélange réticulable, tel que le chauffage ou les UV.

L'invention concerne également un support isolant électrique réalisé en un matériau conforme à l'invention, ainsi que son procédé de fabrication.

Enfin, un autre objet de l'invention concerne un poste sous enveloppe métallique (PSEM) comportant une enveloppe externe délimitant intérieurement une enceinte dans laquelle est monté un conducteur électrique haute tension à l'aide de supports isolants électriques selon l'invention, réalisés en un matériau composite d'isolation électrique selon l'invention, ou réalisés en un matériau composite d'isolation électrique obtenu par le procédé selon l'invention. Le poste sous enveloppe métallique selon l'invention peut avantageusement être utilisé à courant continu et haute tension.

Diverses autres caractéristiques ressortent de la description faite ci-dessous en référence aux dessins annexés qui montrent, à titre d'exemples non limitatifs, des formes de réalisation de l'objet de l'invention.
[Fig. 1] La **figure 1** est une vue schématique d'un matériau composite d'isolation électrique selon l'invention.
[Fig. 2] La **figure 2** est une vue en coupe d'un poste électrique sous enveloppe métallique comprenant un support isolant électriquement sous forme de cône.
[Fig. 3] La **figure 3** est une vue en coupe d'un poste électrique sous enveloppe métallique comprenant un support isolant électriquement sous forme de « post-type ».
[Fig. 4] La **figure 4** est un graphe représentant la densité de courant (A/m²) en fonction du champ électrique pour une formulation A selon l'invention et pour une formulation B hors invention.

L'invention concerne un matériau composite d'isolation électrique **1** adapté à être utilisé pour former des supports isolants électriquement pour maintenir en position les conducteurs présents dans les PSEM. Le matériau composite d'isolation électrique **1** est composé d'une matrice **2** dans laquelle sont dispersés au moins une charge **3** micrométrique et/ou mésométrique, ainsi qu'au moins un liquide ionique **4.**

La matrice **2** est une matrice polyépoxyde de type cycloaliphatique ou de type diglycidyléther, formée respectivement par la réticulation d'un prépolymère époxyde de type cycloaliphatique ou d'un prépolymère époxyde de type diglycidyléther. De préférence, la matrice **2** est une matrice de type diglycidyléther, et en particulier diglycidyléther de bisphénol A.

La matrice polyépoxyde **2** est présente dans le matériau composite d'isolation électrique **1** en une teneur inférieure à 40% en masse par rapport à la masse totale du matériau composite d'isolation électrique. De préférence, le matériau composite d'isolation électrique **1** comprend la matrice **2** en une teneur supérieure ou égale à 20% en masse par rapport à la masse totale du matériau composite d'isolation électrique **1.**

Le matériau composite d'isolation électrique **1** comporte également au moins une charge **3.** Plus précisément, le matériau composite d'isolation électrique **1** comporte au moins une charge **3** micrométrique, ou au moins une charge **3** mésométrique, ou une combinaison d'au moins une charge **3** micrométrique et au moins une charge **3** mésométrique.

La ou les charges **3** utilisées dans le cadre de l'invention peuvent être inertes vis-à-vis de la matrice, c'est-à-dire qu'elles ne réagissent pas avec celle-ci, ou peuvent être fonctionnalisées pour permettre une interaction avec la matrice. Toute charge micrométrique et/ou mésométrique ayant des propriétés d'isolation électrique peut convenir dans le cadre de l'invention. En particulier, les charges **3** micrométriques et mésométriques pouvant être utilisées dans le cadre de l'invention peuvent être de toutes formes, et par exemple de forme sphérique, quasi sphérique, tubulaire ou lamellaire.

Les charges **3** peuvent être de nature inorganique ou organique. Avantageusement, les charges **3** utilisées dans le cadre de l'invention sont de nature inorganique, tel que des oxydes métalliques.

A titre d'exemples de charges **3** micrométriques, on peut citer BN, les polyimides, SiO₂, Al₂O₃, Al(OH)₃, CaO, MgO, CaCO₃, et TiO₂. De préférence, les charges **3** micrométriques sont choisies parmi SiO₂, Al₂O₃, Al(OH)₃ et TiO₂.

A titre d'exemples de charges **3** mésométriques, on peut citer BN, les polyimides, SiO₂, Al₂O₃, Al(OH)₃, CaO, MgO, CaCO₃, et TiO₂. De préférence, les charges **3** mésométriques sont choisies parmi SiO₂, Al₂O₃, Al(OH)₃ et TiO₂.

Selon un mode de réalisation préféré de l'invention, le matériau composite d'isolation électrique comprend, en tant que charge **3** micrométrique et/ou mésométrique, Al₂O₃.

Selon un mode de réalisation préféré de l'invention, le matériau composite d'isolation électrique comprend une matrice **2** de type diglycidyléther, et en particulier diglycidyléther de bisphénol A, et Al₂O₃ en tant que charge **3** micrométrique et/ou mésométrique.

Dans le cadre de l'invention, une ou plusieurs charges **3** peuvent être fonctionnalisées en surface. Une telle fonctionnalisation permet en particulier d'améliorer la compatibilité des charges avec la matrice, et alors d'améliorer la conductivité thermique du matériau et le coefficient d'expansion thermique. Les fonctionnalisations de surface des charges sont usuelles dans l'état de l'art et ne seront pas détaillées ici.

Le matériau composite d'isolation électrique **1** selon l'invention comprend de 20% à 75% en masse de charges **3** micrométriques et/ou mésométriques, de préférence de 40 à 70% en masse, par rapport à la masse totale du matériau composite d'isolation électrique **1.** Le matériau composite d'isolation électrique **1** selon l'invention comprend avantageusement de 15 à 45% volumique de charges **3** micrométriques et/ou mésométriques par rapport au volume total du matériau composite d'isolation électrique **1.**

Le matériau composite d'isolation électrique **1** selon l'invention comprend également au moins un liquide ionique **4,** en une teneur allant de 0,1% à 20% en masse, de préférence de 0,1% à 5% en masse, par rapport à la masse totale du matériau composite d'isolation électrique **1.**

Tout type de liquide ionique convient dans le cadre de l'invention. En particulier, le ou les liquides ioniques **4** peuvent être choisis parmi les sels formés par n'importe quelle combinaison des cations et des anions décrits ci-après.

Les liquides ioniques **4** peuvent comprendre un cation ammonium, imidazolium, pyrrolidinium, pyridinium, pipéridinium, triazolium, ou phosphonium. De préférence, le cation du liquide ionique **4** est choisi parmi les cations ammonium, imidazolium, pyridinium et phosphonium.

De préférence, les cations ammonium utilisés dans le cadre de l'invention sont de formule **I** suivante :

### [Chem. 1]

N⁺(R1)(R2)(R3)(R4) **(I),**

avec **R1, R2, R3** et **R4** identiques ou différents et choisis parmi les groupes C1-C20 alkyles, de préférence C1-C10 alkyles, cycliques ou de préférence acycliques, linéaires ou ramifiés, substitués ou non substitués par un ou plusieurs substituants choisis parmi -C1-C10 alkyle, -CN, -O(C1-C6 alkyle), -OH, -NH₂, - SO₃H, de préférence un ou plusieurs substituants -C1-C10 alkyle, -CN ou -O(C1-C6 alkyle).

De préférence, les cations ammonium peuvent être choisis parmi ceux de formule **I** tels que **R1, R2, R3** et **R4** sont identiques ou différents et choisis parmi les groupes C1-C10 alkyles, cycliques ou de préférence acycliques, linéaires ou ramifiés, substitués ou non substitués par un ou plusieurs substituants choisis parmi -C1-C10 alkyle, -CN, -O(C1-C6 alkyle).

A titre d'exemples de cations ammonium pouvant être utilisés dans le cadre de l'invention, on peut citer ceux de formule **I** tels que **R1, R2, R3** et **R4** sont identiques ou différents et choisis parmi les groupes méthyle, éthyle, propyle, butyle, pentyle, hexyle, éventuellement substitués par un ou plusieurs substituants -CN, -OMe, -OEt, -Me.

De préférence, les cations imidazolium utilisés dans le cadre de l'invention sont de formule **II** suivante :

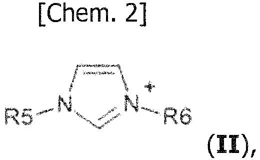

avec **R5** et **R6** identiques ou différents et choisis parmi les groupes C1-C20 alkyles, de préférence C1-C10 alkyles, cycliques ou de préférence acycliques, linéaires ou ramifiés, substitués ou non substitués par un ou plusieurs substituants choisis parmi -C1-C10 alkyle, -CN, -O(C1-C6 alkyle), -OH, -NH₂, - SO₃H, de préférence un ou plusieurs substituants -C1-C10 alkyle, -CN ou -O(C1-C6 alkyle).

De préférence, les cations imidazolium peuvent être choisis parmi ceux de formule **II** tels que **R5** et **R6** sont identiques ou différents et choisis parmi les groupes C1-C10 alkyles, cycliques ou de préférence acycliques, linéaires ou ramifiés, substitués ou non substitués par un ou plusieurs substituants choisis parmi -C1-C10 alkyle, -CN, -O(C1-C6 alkyle).

A titre d'exemples de cation imidazolium pouvant être utilisés dans le cadre de l'invention, on peut citer ceux de formule **II** tels que **R5** et **R6** sont identiques ou différents et choisis parmi les groupes méthyle, éthyle, propyle, butyle, pentyle, hexyle, éventuellement substitués par un ou plusieurs substituants -C1-C10 alkyle, -CN, -OMe, -OEt.

De préférence, les cations pyridinium utilisés dans le cadre de l'invention sont de formule **III** suivante :

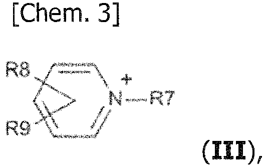

avec :
- **R7, R8** et **R9** identiques ou différents,
- **R7** choisi parmi les groupes C1-C20 alkyles, de préférence C1-C10 alkyles, cycliques ou de préférence acycliques, linéaires ou ramifiés, substitués ou non substitués par un ou plusieurs substituants choisis parmi -C1-C10 alkyle, -CN, - O(C1-C6 alkyle), -OH, -NH₂, -SO₃H, de préférence un ou plusieurs substituants-C1-C10 alkyle, -CN ou -O(C1-C6 alkyle),
- **R8** et **R9,** identiques ou différents, choisis parmi un atome d'hydrogène, les groupes C1-C20 alkyles, de préférence C1-C10 alkyles, cycliques ou de préférence acycliques, linéaires ou ramifiés, substitués ou non substitués par un ou plusieurs substituants choisis parmi -C1-C10 alkyle, -CN, -O(C1-C6 alkyle), - OH, -NH₂, -SO₃H, de préférence un ou plusieurs substituants -C1-C10 alkyle, -CN ou -O(C1-C6 alkyle).

Selon un mode de réalisation, **R8** et **R9** sont en position méta et ne représentent pas un atome d'hydrogène.

Selon un mode de réalisation, **R8** et **R9** sont en position ortho et ne représentent pas un atome d'hydrogène.

Selon un mode de réalisation, **R9** représente un atome d'hydrogène, et **R8** est en position para et ne représente pas un atome d'hydrogène.

Selon un mode de réalisation, **R8** et **R9** représentent chacun un atome d'hydrogène.

Selon un premier mode de réalisation préféré, le cation pyridinium est choisi parmi ceux de formule **III** avec :
- **R7** et **R8,** identiques ou différents, et choisis parmi les groupes C1-C10 alkyles, cycliques ou de préférence acycliques, linéaires ou ramifiés, substitués ou non substitués par un ou plusieurs substituants choisis parmi -C1-C10 alkyle, -CN, - O(C1-C6 alkyle),
- **R9** représentant un atome d'hydrogène, et
- **R9** étant situé en position para par rapport à l'atome d'azote du pyridinium.

Selon un second mode de réalisation préféré, le cation pyridinium est choisi parmi ceux de formule **III** avec :
- **R7, R9** et **R8,** identiques ou différents, choisis parmi les groupes C1-C10 alkyles, cycliques ou de préférence acycliques, linéaires ou ramifiés, substitués ou non substitués par un ou plusieurs substituants choisis parmi -C1-C10 alkyle, - CN, -O(C1-C6 alkyle), et
- **R8** et **R9** étant situé en position ortho par rapport à l'atome d'azote du pyridinium.

Selon un troisième mode de réalisation préféré, le cation pyridinium est choisi parmi ceux de formule **III** avec :
- **R7** choisi parmi les groupes C1-C10 alkyles, cycliques ou de préférence acycliques, linéaires ou ramifiés, substitués ou non substitués par un ou plusieurs substituants choisis parmi -C1-C10 alkyle, -CN, -O(C1-C6 alkyle), et
- **R8** et **R9** représentant chacun un hydrogène.

A titre d'exemples de cation pyridinium pouvant être utilisés dans le cadre de l'invention, on peut citer le 1-(3-cyanopropyl)pyridinium et le 1-butyl-4-methylpyridinium.

De préférence, les cations phosphonium utilisés dans le cadre de l'invention sont de formule **IV** suivante :

### [Chem. 4]

P⁺(R10)(R11)(R12)(R13) (**IV**),

avec **R10, R11, R12,** et **R13** identiques ou différents, et choisis parmi les groupes C1-C20 alkyles, de préférence C1-C10 alkyles, cycliques ou de préférence acycliques, linéaires ou ramifiés, substitués ou non substitués par un ou plusieurs substituants choisis parmi -C1-C10 alkyle, -CN, -O(C1-C6 alkyle), - OH, -NH₂, -SO₃H, de préférence un ou plusieurs substituants -C1-C10 alkyle, -CN ou -O(C1-C6 alkyle).

De préférence, les cations phosphonium peuvent être choisis parmi ceux de formule **IV** tels que **R10, R11, R12** et **R13** sont identiques ou différents et choisis parmi les groupes C1-C10 alkyles, cycliques ou de préférence acycliques, linéaires ou ramifiés, substitués ou non substitués par un ou plusieurs substituants choisis parmi -C1-C10 alkyle, -CN, -O(C1-C6 alkyle).

A titre d'exemples de cation phosphonium pouvant être utilisés dans le cadre de l'invention, on peut citer les cations phosphonium de formule **IV** tels que **R10 = R11 = R12** et représentent un groupe alkyle non substitué linéaire ou ramifié, de préférence un groupe alkyle en C1-C10, et par exemple un groupe n-hexyle, et **R13** représente un groupe alkyle non substitué linéaire ou ramifié, de préférence un groupe alkyle en C1-C10, et par exemple un groupe n-tétradécyle.

Les liquides ioniques **4** peuvent comprendre un anion organique ou inorganique.

A titre d'exemple d'anion inorganique pouvant être utilisé, on peut citer :
- les halogénures tels que Cl⁻, Br⁻, I⁻, F⁻,
- l'hexafluorophosphate (PF₆⁻),
- le tétrafluorure de bore (BF₄⁻).

A titre d'exemple d'anion organique pouvant être utilisé dans le cadre de l'invention, on peut citer les carbonates, les tosylates, ou les phosphinates.

Les phosphinates pouvant être utilisés dans le cadre de l'invention peuvent être de formule **V** suivante : 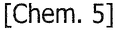 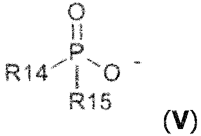 avec **R14** et **R15** identiques ou différents et choisis parmi les groupes C1-C20 alkyles, de préférence C1-C10 alkyles, cycliques ou de préférence acycliques, linéaires ou ramifiés, substitués ou non substitués par un ou plusieurs substituants choisis parmi -C1-C10 alkyle, -CN, -O(C1-C6 alkyle), -OH, -NH₂, - SO₃H, de préférence un ou plusieurs substituants -C1-C10 alkyle, -CN ou -O(C1-C6 alkyle).

De préférence, les phosphinates peuvent être choisis parmi ceux de formule **V** tels que **R14** et **R15** sont identiques ou différents et choisis parmi les groupes C1-C10 alkyles, cycliques ou de préférence acycliques, linéaires ou ramifiés, substitués ou non substitués par un ou plusieurs substituants choisis parmi -C1-C10 alkyle, -CN, -O(C1-C6 alkyle).

A titre d'exemple d'anion phosphinate pouvant être utilisé dans le cadre de l'invention, on peut citer les anions phosphinates de formule **V** tels que **R14** = **R15** et représentent un groupe 2,4,4-triméthylpentyle.

Selon un mode de réalisation particulier de l'invention, le liquide ionique **4** utilisé dans le cadre de l'invention est formé d'un cation phosphonium de formule **IV** telle que définie ci-dessus et d'un anion phosphinate de formule **V** tel que définie ci-dessus. Selon ce mode de réalisation, le liquide ionique peut par exemple être de formule **VI** suivante :

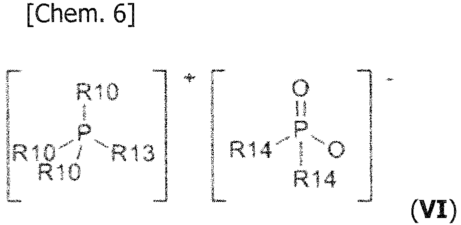

avec **R10, R13** et **R14** tels que définis ci-dessus.

Selon un mode de réalisation particulier de l'invention, le liquide ionique **4** utilisé dans le cadre de l'invention est formé d'un cation phosphonium de formule **IV** telle que définie ci-dessus et d'un anion inorganique, de préférence un halogénure tel que défini ci-dessus. Selon ce mode de réalisation, le liquide ionique peut par exemple être de formule **VII** suivante :

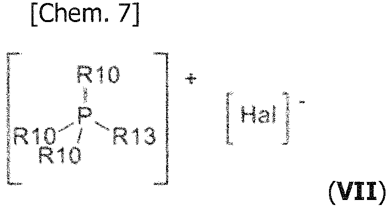

avec **R10** et **R13** tels que définis ci-dessus, et **HaI** représentant un halogène, et de préférence Cl.

Le matériau composite d'isolation électrique **1** peut également comporter des additifs, tels que des diluants, ou des plastifiants.

La présence d'un liquide ionique en faible quantité permet d'augmenter légèrement la conductivité électrique du matériau composite d'isolation électrique **1,** et typiquement jusqu'à deux ordres de grandeur (10²) comparé à un même matériau composite d'isolation électrique sans liquide ionique, et ce sans impacter négativement les autres propriétés physico-chimiques du matériau. Ainsi, le matériau composite d'isolation électrique **1** selon l'invention a une conductivité électrique allant de de 10⁻¹⁸ à 10⁻¹² S/m, de préférence d'environ 10⁻¹⁵ S/m. Dans le cadre de l'invention, la « conductivité électrique » désigne la conductivité électrique volumique et/ou la conductivité électrique surfacique et peut être mesurée selon la norme ISO 62631-3.

Selon la nature du ou des liquide(s) ionique(s) **4** présents, les propriétés de conductivité électrique du matériau composite d'isolation électrique **1** sont modifiées selon des voies distinctes.

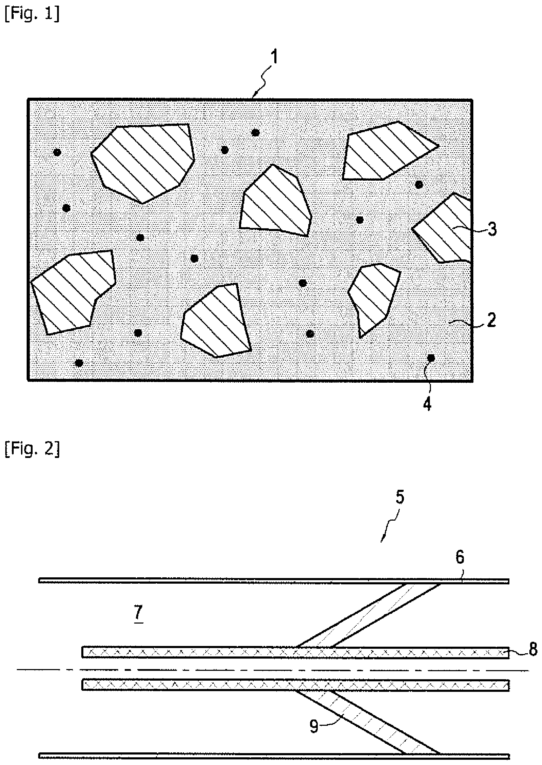

Selon un premier mode de réalisation, le liquide ionique est dispersé dans la matrice **2** polyépoxyde sans la modifier chimiquement. Tel que cela est représenté sur la **Figure 1****,** les charges du liquide ionique sont « libres » au sein de la matrice **2** et peuvent induire un courant électrique.

Selon un deuxième mode de réalisation, la matrice **2** polyépoxyde est liée chimiquement et/ou physiquement au liquide ionique. Le courant électrique pouvant être induit est alors modifié par la présence du liquide ionique.

Selon un troisième mode de réalisation, la matrice **2** polyépoxyde est liée chimiquement et/ou physiquement à une partie du liquide ionique, une partie du liquide ionique étant alors dispersé dans la matrice **2.** Le courant électrique pouvant être induit est alors une combinaison de la présence de la partie de liquide ionique lié à la matrice et la partie de liquide ionique « libre » au sein de la matrice.

Le matériau composite d'isolation électrique **1** selon l'invention est suffisamment dur pour pouvoir former un support apte à maintenir en position une autre pièce telle qu'un conducteur électrique. Plus précisément, le matériau composite d'isolation électrique **1** a un module élastique supérieur à 5000 MPa, et de préférence supérieur à 10000 MPa. Dans le cadre de l'invention, le module élastique est mesuré selon la norme ISO 527.

Le matériau composite d'isolation électrique **1** selon l'invention présente des spectres RMN du carbone et du phosphore caractéristiques, permettant son identification par méthode de comparaison.

La présente invention concerne également un procédé de préparation d'un matériau composite d'isolation électrique **1** tel que défini dans le cadre de l'invention. Ce procédé comprend la préparation d'un mélange réticulable, son introduction dans un moule, puis la réticulation du mélange réticulable.

La première étape de préparation d'un mélange réticulable est réalisée en mélangeant, selon toute technique connue de l'homme de l'art, un prépolymère époxyde, une ou plusieurs charges micrométriques et/ou mésométriques, et au moins un liquide ionique.

Le prépolymère époxyde peut être un prépolymère époxyde de type cycloaliphatique ou un prépolymère époxyde de type diglycidyléther. Selon un mode de réalisation préféré de l'invention, le prépolymère époxyde est un prépolymère époxyde de type diglycidyléther, et en particulier diglycidyléther de bisphénol A.

Les charges micrométriques et mésométriques ainsi que les liquides ioniques pouvant être utilisés dans le cadre de l'invention sont tels que définis ci-dessus pour le matériau composite d'isolation électrique.

Lorsque le mélange réticulable comprend un agent de réticulation distinct du ou des liquides ioniques et/ou un additif, ceux-ci sont incorporés au mélange réticulable lors de cette première étape, ou dans un second temps avant de finaliser la réticulation.

Selon un mode de réalisation particulier, les charges micrométriques et/ou mésométriques sont mélangées ensemble dans un premier temps, puis le liquide ionique est ajouté au mélange de charges dans un second temps, avant l'étape de réticulation du mélange réticulable.

Avantageusement, la répartition des charges et des liquides ioniques dans le mélange réticulable est homogène.

La deuxième étape du procédé de fabrication d'un matériau composite d'isolation électrique **1** selon l'invention consiste à introduire le mélange réticulable obtenu à la première étape dans un moule ayant la forme désirée. Cette introduction peut être réalisée selon toute technique connue de l'homme de l'art. De préférence, cette introduction dans le moule est réalisée soit par coulée gravitationnelle, soit par injection selon toute technique connue dans l'état de l'art, telle que la gélification par pression automatisée.

Dans le cadre de l'invention, le mélange réticulable a avantageusement une viscosité allant de 6000 mPa.s à 15000 mPa.s, de préférence de 10000 mPa.s à 12000 mPas, de préférence mesurée à 80 °C selon la norme ISO 12058. Ainsi, le mélange réticulable a une viscosité permettant la fabrication par le biais d'une coulée gravitationnelle sous vide ou par gélification sous pression automatisée, ce qui facilite la fabrication du matériau composite d'isolation électrique selon l'invention. De plus, une viscosité trop élevée du mélange réticulable le rendrait difficile à introduire dans un moule et provoquerait la présence de bulles dans le mélange réticulable, et conduirait donc à un matériau final poreux et/ou comportant des défauts. A l'opposé une viscosité trop faible réduirait l'efficacité du procédé de fabrication par gélification sous pression automatisée et impacterait la dispersion des charges.

La troisième étape du procédé de fabrication d'un matériau composite d'isolation électrique **1** selon l'invention consiste à réticuler le mélange réticulable préalablement introduit dans le moule. Cette étape de réticulation peut être réalisée selon toute technique connue de l'homme de l'art. En particulier, cette étape peut avoir lieu en présence d'un moyen de réticulation, et éventuellement grâce à un agent de réticulation distinct présent dans le mélange réticulable.

Selon un premier mode de réalisation, une partie du liquide ionique présent dans le mélange réticulable peut initier la réaction de réticulation du prépolymère époxyde présent dans le mélange réticulable, et ainsi jouer le rôle d'agent de réticulation. Dans ce cas, le liquide ionique **4** modifie chimiquement le prépolymère époxyde, en s'attachant à celui-ci de manière chimique ou physique, permettant alors une homopolymérisation. Cela conduit alors à une matrice **2** polyépoxyde liée chimiquement ou physiquement à une partie du liquide ionique **4.** Selon ce premier mode de réalisation, le mélange réticulable ne comprend pas d'agent de réticulation distinct du ou des liquides ioniques présents dans le mélange réticulable. Alternativement selon ce premier mode de réalisation, le mélange réticulable peut contenir un agent de réticulation, mais en quantité inférieure à ce qui est nécessaire dans le cas où le mélange réticulable ne comprend pas de liquide ionique apte à initier la réaction de réticulation du prépolymère époxyde. Ce premier mode de réalisation permet avantageusement de simplifier le procédé et de diminuer les coûts de production.

Selon un second mode de réalisation, le ou les liquides ioniques ne permettent pas d'initier la réaction de réticulation et un agent de réticulation distinct est nécessaire. Selon ce second mode de réalisation, un agent de réticulation est donc présent dans le mélange réticulable. L'agent de réticulation peut être un durcisseur éventuellement en combinaison avec un amorceur. Plus précisément, l'agent de réticulation peut être un durcisseur activé, un mélange contenant un durcisseur et un amorceur, ou une combinaison d'un durcisseur et d'un amorceur. Dans le cadre de l'invention, les durcisseurs et les amorceurs pouvant être utilisés pour la réticulation à partir du prépolymère époxyde de type cycloaliphatique ou de type diglycicyléther sont ceux habituellement employés dans l'état de l'art. A titre d'exemples de durcisseurs, on peut citer les diamines et les anhydrides.

Selon un mode de réalisation, l'étape de réticulation a lieu sans moyen de réticulation. Selon un autre mode de réalisation, l'étape de réticulation est réalisée grâce à un moyen de réticulation, tel que le chauffage ou les UV par exemple.

Enfin, le procédé peut comprendre une dernière étape consistant à démouler la structure obtenue après l'étape de réticulation et réalisée en matériau composite d'isolation électrique **1,** selon toute technique connue dans l'état de l'art.

La pièce en matériau composite d'isolation électrique ainsi obtenue est facile à fabriquer, et possède les caractéristiques techniques requises pour être utilisée en tant que support isolant en haute tension et à courant continu (à savoir une bonne tenue électrique, une bonne résistance mécanique, une bonne résistance à l'érosion électrique et à la propagation interne d'arcs électriques, une bonne conductivité thermique, faible porosité et une conductivité électrique supérieure à celle des isolants haute tension à courant alternatif).

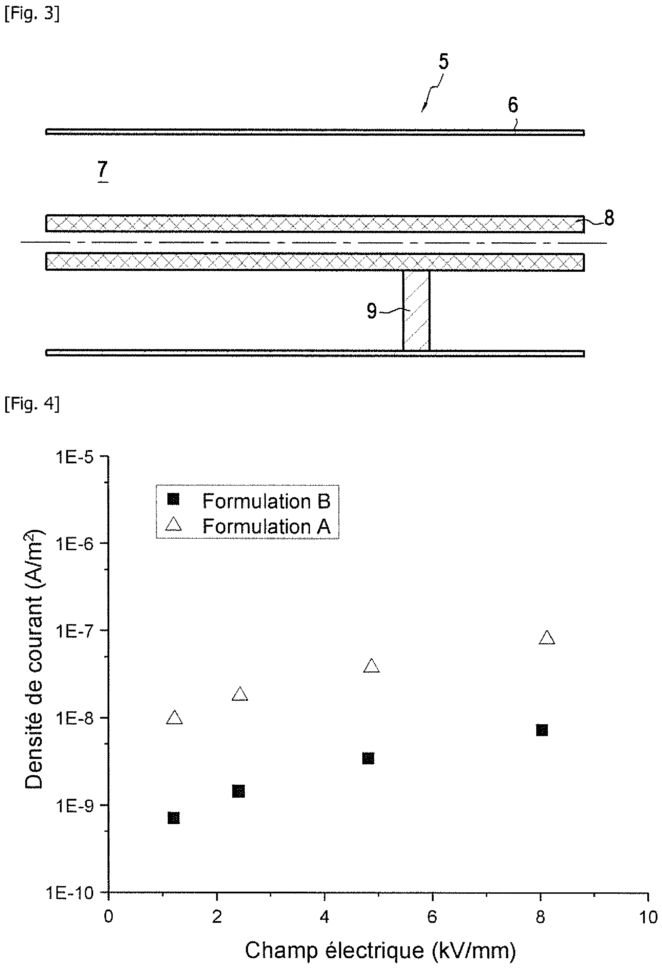

Tel que cela ressort aux **Figures 2** et **3**, l'invention concerne également un poste sous enveloppe métallique **5** comportant une enveloppe externe **6** délimitant intérieurement une enceinte **7** dans laquelle est montée un conducteur électrique haute tension **8** maintenu en position par des supports isolants électriquement **9** réalisés en un matériau composite d'isolation électrique **1** selon l'invention. Grâce à l'étanchéité de l'enveloppe externe métallique **6**, le volume interne de l'enceinte **7** est rempli d'un fluide isolant, typiquement un gaz isolant tel que SF₆. Avantageusement, le poste sous enveloppe métallique **5** est à courant continu et à haute tension.

Selon un exemple préféré de réalisation représenté aux **Figures 2** et **3****,** l'enveloppe métallique externe **6** présente une forme cylindrique. Cet exemple n'est pas limitatif.

Un conducteur électrique haute tension **8** de tout type connu en soi est monté à l'intérieur de l'enveloppe métallique externe **6.** Le conducteur électrique haute tension **8** est de forme tubulaire dans l'exemple de réalisation représenté aux **Figures 2** et **3****.**

Le conducteur électrique haute tension **8** est maintenu au centre de l'enveloppe métallique externe **6** à l'aide de supports isolants électriquement **9**, tels que des entretoises réalisées dans les exemples illustrés par des cônes **(****Figure 2****)** ou des « post-types » (**Figure 3**)**.** Bien que non illustrées, d'autres formes pourraient être envisagées. Quelle que soit leur forme, les supports isolants électriquement **9** sont réalisés en un matériau composite d'isolation électrique **1** conforme à l'invention.

L'invention concerne également un support isolant électrique réalisé en un matériau composite d'isolation électrique selon l'invention, ou réalisé en un matériau composite d'isolation électrique obtenu par le procédé selon l'invention. Un tel support isolant électrique peut être utilisé dans un poste sous enveloppe métallique utilisé en haute tension à courant continu.

Les exemples ci-après permettent d'illustrer l'invention mais n'ont aucun caractère limitatif.

Une formulation A selon l'invention et une formulation B hors invention ont été préparées.

La formulation A selon l'invention contient 18% en masse de prépolymère époxyde (commercialisé par Hunstman sous la référence Araldite CY 5923), 14% en masse d'un agent de réticulation de type anhydride (commercialisé par Huntsman sous la dénomination Aradur HY 5925), 66% en masse de charge Al₂O₃ (commercialisé par Imerys), et 2% en masse d'un liquide ionique de type phosphonium (chlorure de trihexyl(tétradécyl)phosphonium, commercialisé par Cytec sous la référence CYPHOS^{®} IL101). La formulation A est préparée en mélangeant le prépolymère époxyde, l'agent de réticulation et la charge, puis en ajoutant le liquide ionique à ce mélange. Le mélange réticulable est ensuite réticulé.

La formulation B hors invention comprend le même prépolymère époxyde, le même agent de réticulation et la même charge que la formulation A, mais ne contient pas de liquide ionique. La formulation B comprend donc 19% en masse de prépolymère époxyde (commercialisé par Hunstman sous la référence Araldite CY 5923), 15% en masse d'un agent de réticulation de type anhydride (commercialisé par Huntsman sous la dénomination Aradur HY 5925) et 66% en masse de charge Al₂O₃ (commercialisé par Imerys). La formulation B est préparée de la même manière que la formulation A, hormis l'addition de liquide ionique.

La conductivité électrique volumique des formulations A et B a été mesurée selon la norme ISO 62631. Les résultats sont reportés dans le tableau 1 et dans la figure 4.

La formulation A a une conductivité électrique volumique supérieure d'approximativement une décade comparée à celle de la formulation B, et ce quelle que soit la température ou le champ électrique appliqué. Ainsi, l'ajout de liquide ionique dans un matériau d'isolation électrique, dans des teneurs telles que décrites dans le cadre de l'invention, permet d'augmenter légèrement la conductivité électrique volumique du matériau : le matériau ainsi obtenu conserve ses propriétés d'isolation électrique, tout en permettant une meilleure évacuation des charges électriques.

**[Tableau 1]**

| Conductivité électrique volumique (S/m) | 60 °C ; 8 kV/mm | 80°C ; 8 kV/mm |
|---|---|---|
| Formulation A | 9,92.10⁻¹⁵ | 1,01.10⁻¹³ |
| Formulation B | 9,06.10⁻¹⁶ | 1,43.10⁻¹⁴ |

L'invention n'est pas limitée aux exemples décrits et représentés car diverses modifications peuvent y être apportées sans sortir de son cadre.

## Revendications

1. Matériau composite d'isolation électrique (**1**) pouvant être employé en haute tension, et formé à partir de :
i) une matrice (**2**) polyépoxyde de type cycloaliphatique ou de type diglycidyléther en une teneur inférieure à 40% en masse,
ii) de 20 à 75% en masse d'une ou plusieurs charges (**3**) micrométriques et/ou mésométriques,
iii) de 0,1 à 20% en masse d'au moins un liquide ionique (**4**), les masses étant exprimées par rapport à la masse totale du matériau composite d'isolation électrique, et les charges mésométriques étant des charges dont la plus grande dimension est comprise entre 100 nanomètres et 2 micromètres, qui peut être mesuré comme décrit dans la description.

2. Matériau composite d'isolation électrique (**1**) selon la revendication 1, dans lequel le ou les liquides ioniques (**4**) sont de type ammonium, imidazolium, pyridinium ou phosphonium.

3. Matériau composite d'isolation électrique (**1**) selon la revendication 1 ou 2, dans lequel la teneur en liquide(s) ionique(s) (**4**) va de 0,1 à 5% en masse, par rapport à la masse totale du matériau composite d'isolation électrique (**1**).

4. Matériau composite d'isolation électrique (**1**) selon l'une quelconque des revendications précédentes comprenant au moins une charge (**3**) micrométrique et/ou mésométrique choisie(s) parmi BN, un polyimide, SiO₂, Al₂O₃, Al(OH)₃, CaO, MgO, CaCO₃, et TiO₂.

5. Matériau composite d'isolation électrique (**1**) selon l'une quelconque des revendications précédentes, dans lequel la teneur en charge(s) (**3**) micrométrique(s) et/ou mésométrique(s) va de 40 à 70% en masse, par rapport à la masse totale du matériau composite d'isolation électrique (**1**).

6. Matériau composite d'isolation électrique (**1**) selon l'une quelconque des revendications précédentes, dans lequel la matrice (**2**) est une matrice polyépoxyde de type diglycidyléther, et de préférence une matrice polyépoxyde de type diglycidyléther de bisphénol A.

7. Matériau composite d'isolation électrique (**1**) selon l'une quelconque des revendications précédentes ayant une conductivité électrique volumique allant de 10⁻¹⁸ à 10⁻¹² S/m, de préférence d'environ 10⁻¹⁵ S/m, de préférence mesurée selon la norme ISO 62631-3.

8. Matériau composite d'isolation électrique (**1**) selon l'une quelconque des revendications précédentes ayant une température de transition vitreuse Tg comprise entre 70 °C et 160 °C, de préférence comprise entre 100 °C et 130 °C.

9. Support isolant électrique (**9**) réalisé en un matériau composite d'isolation électrique (**1**) selon l'une quelconque des revendications précédentes.

10. Poste sous enveloppe métallique (**5**) comportant une enveloppe externe (**6**) délimitant intérieurement une enceinte (**7**) dans laquelle est monté un conducteur électrique haute tension (**8**) à l'aide de supports isolants électriques (**9**) selon la revendication 9.

11. Poste sous enveloppe métallique (**5**) selon la revendication 10 à courant continu et haute tension.

12. Procédé de fabrication d'un matériau composite d'isolation électrique (**1**) selon l'une quelconque des revendications 1 à 8 comprenant les étapes suivantes :
a) préparation d'un mélange réticulable comprenant un prépolymère époxyde de type cycloaliphatique ou de type diglycidyléther, d'une ou plusieurs charges (**3**) micrométriques et/ou mésométriques, d'au moins un liquide ionique (**4**), et éventuellement d'un agent de réticulation distinct du ou des liquides ioniques,
b) introduction dudit mélange réticulable dans un moule, et
c) réticulation du mélange réticulable situé dans le moule.

13. Procédé selon la revendication 12, dans lequel le mélange réticulable a une viscosité allant de 6000 mPa.s à 15000 mPa.s, de préférence de 10000 mPa.s à 12000 mPas, de préférence mesurée à 80 °C selon la norme ISO 12058.

14. Procédé selon la revendication 12 ou 13, dans lequel le mélange réticulable comprend un agent de réticulation distinct du ou des liquides ioniques choisi parmi un durcisseur activé, ou un mélange contenant un durcisseur et un amorceur, ou une combinaison d'un durcisseur et d'un amorceur, le durcisseur étant de préférence choisi parmi les durcisseurs de type amine ou anhydride.

15. Procédé selon la revendication 12 ou 13, dans lequel le mélange réticulable ne comprend pas d'agent de réticulation distinct du ou des liquides ioniques.

16. Procédé selon l'une quelconque des revendications 12 à 15, dans lequel la réticulation est réalisée par application d'un moyen de réticulation, tel que du chauffage ou des UV.

## Patentansprüche

1. Elektrisches Isoliermaterial (1), das bei Hochspannung verwendet werden kann, und gebildet aus:
i) einer Polyepoxydmatrix (2) vom Typ cycloaliphatisch oder vom Typ Diglydcidylether und einem Gehalt von weniger als 40 Massenprozent,
ii) von 20 bis 75 Massenprozent einer oder mehrerer mikrometrischer und/oder mesometrischer Ladungen (3),
iii) von 0,1 bis 20 Massenprozent mindestens einer ionischen Flüssigkeit (4), wobei die Massen mit Bezug auf die Gesamtmasse des elektrischen Verbund-Isoliermaterials (1) exprimiert sind und wobei die mesometrischen Ladungen Ladungen sind, deren größte Abmessung im Bereich zwischen 100 Nanometer und 2 Mikrometer liegt, die wie in der Beschreibung dargestellt gemessen werden kann.

2. Elektrisches Verbund-Isoliermaterial (1) nach Anspruch 1, wobei die ionische(n) Flüssigkeit(en) (4) vom Typ Ammonium, Imidazol, Pyridinium oder Phosphonium ist/sind.

3. Elektrisches Verbund-Isoliermaterial (1) nach Anspruch 1 oder 2, wobei der Gehalt an ionischer/en Flüssigkeit(en) (4) von 0,1 bis 5 Massenprozent mit Bezug auf die Gesamtmasse des elektrischen Verbund-Isoliermaterials (1) reicht.

4. Elektrisches Verbund-Isoliermaterial (1) nach einem der vorhergehenden Ansprüche, umfassend mindestens eine mikrometrische und/oder mesometrische Ladung (3), ausgewählt aus BN, einem Polyimid, SiO₂, Al₂0₃, Al(OH)₃, CaO, MgO, CaCO₃ und TiO₂.

5. Elektrisches Verbund-Isoliermaterial (1) nach einem der vorhergehenden Ansprüche, wobei der Gehalt an mikrometrischer/en und/oder mesometrischer/en Ladung(en) (3) von 40 bis 70 Massenprozent mit Bezug auf die Gesamtmasse des elektrischen Verbund-Isoliermaterials (1) reicht.

6. Elektrisches Verbund-Isoliermaterial (1) nach einem der vorhergehenden Ansprüche, wobei die Matrix (2) eine Polyepoxydmatrix vom Typ Diglycidylether und vorzugsweise eine Polyepoxydmatrix vom Typ Bisphenol A-Diglycidylether ist.

7. Elektrisches Verbund-Isoliermaterial (1) nach einem der vorhergehenden Ansprüche, das eine elektrische Volumenleitfähigkeit aufweist, die von 10⁻¹⁸ bis 10⁻¹² S/m reicht, vorzugsweise von ungefähr 10⁻¹⁵ S/m, vorzugsweise gemessen gemäß der Norm ISO 62631-3.

8. Elektrisches Verbund-Isoliermaterial (1) nach einem der vorhergehenden Ansprüche, das eine Glasübergangstemperatur Tg aufweist, die im Bereich zwischen 70 °C und 160 °C liegt, vorzugsweise im Bereich zwischen 100 °C und 130 °C.

9. Elektrischer isolierender Träger (9), das aus einem elektrischen Verbund-Isoliermaterial (1) nach einem der vorhergehenden Ansprüche hergestellt ist.

10. Vorrichtung unter einer metallischen Hülle (5), die eine externe Hülle (6) umfasst, die im Inneren ein Gehäuse (7) begrenzt, in der ein elektrischer Hochspannungsleiter (8) mit Hilfe von elektrischen Isolierträgern (9) nach Anspruch 9 montiert ist.

11. Vorrichtung unter einer metallischen Hülle (5) nach Anspruch 10 mit Gleichspannung und Hochspannung

12. Verfahren zur Herstellung eines elektrischen Verbund-Isoliermaterials (1) nach einem der Ansprüche 1 bis 8, das die folgenden Schritte umfasst:
a) Zubereiten eines vernetzbaren Gemischs, das ein Epoxydpräpolymer vom Typ cycloaliphatisch oder vom Typ Diglycidylether mit einer oder mehreren mikrometrischen und/oder mesometrischen Ladungen (3), mindestens einer ionischen Flüssigkeit (4) und eventuell einem Vernetzungsmittel, das verschieden von der oder den ionischen Flüssigkeit(en) ist, umfasst.
b) Einführen des vernetzbaren Gemischs in eine Form, und
c) Vernetzen des vernetzbaren Gemischs, das sich in der Form befindet.

13. Verfahren nach Anspruch 12, wobei das vernetzbare Gemisch eine Viskosität aufweist, die von 6000 mPa.s bis 15000 mPa.s reicht, vorzugsweise von 10000 mPa.s bis 12000 mPas, vorzugsweise gemessen bei 80 ºC gemäß der Norm ISO 12058.

14. Verfahren nach Anspruch 12 oder 13, wobei das vernetzbare Gemisch ein Vernetzungsmittel umfasst, das verschieden von der oder den ionischen Flüssigkeit(en) ist, das aus einer aktivierten Härte oder einem Gemisch, das ein Härtungsmittel enthält, und einem Starter oder ein Kombination aus einem Härtungsmittel und einem Starter ausgewählt ist, wobei das Härtungsmittel vorzugsweise ausgewählt ist aus den Härtungsmitteln vom Typ Amin oder Anhydrid.

15. Verfahren nach Anspruch 12 oder 13, wobei das vernetzbare Gemisch kein Vernetzungsmittel umfasst, das verschieden von der oder den ionischen Flüssigkeit(en) ist.

16. Verfahren nach einem der Ansprüche 12 bis 15, wobei die Vernetzung durch das Anwenden eines Vernetzungsmediums wie z. B. Erhitzen oder UV-Strahlen durchgeführt wird.

## Claims

1. Electrically insulating composite material (**1** that may be used in high voltage, and formed from:
i) a polyepoxide matrix (**2**) of cycloaliphatic type or of diglycidylether type in a content of less than 40% by mass,
ii) from 20 to 75% by mass of one or several micrometric and/or mesometric filler(s) (**3**),
iii) from 0.1 to 20% by mass of at least one ionic liquid (**4**), the masses being expressed relative to the total mass of the electrically insulating composite material, and the mesometric fillers being fillers whose largest dimension is comprised between 100 nanometers and 2 micrometers that may be measured as described in the specification.

2. Electrically insulating composite material (**1** according to claim 1, wherein the ionic liquid(s) (**4**) are of ammonium, imidazolium, pyridinium or phosphonium type.

3. Electrically insulating composite material (**1**according to claim 1 or 2, wherein the content of ionic liquid(s) (**4**) ranges from 0.1 to 5% by mass, relative to the total mass of the electrically insulating composite material (**1**).

4. Electrically insulating composite material (**1** according to any one of the preceding claims comprising at least one micrometric and/or mesometric filler (**3**) selected from BN, a polyimide, SiO₂, Al₂O₃, Al(OH)₃, CaO, MgO, CaCO₃, and TiO₂.

5. Electrically insulating composite material (**1** according to any one of the preceding claims, wherein the content of micrometric and/or mesometric filler(s) (**3**) ranges from 40 to 70 % by mass, relative to the total mass of the electrically insulating composite material (**1**).

6. Electrically insulating composite material (**1** according to any one of the preceding claims, wherein the matrix (**2**) is a polyepoxide matrix of diglycidyl ether type, and preferably a polyepoxide matrix of the diglycidyl ether of bisphenol A type.

7. Electrically insulating composite material (**1** according to any one of the preceding claims having a volumic electrical conductivity ranging from 10⁻¹⁸ to 10⁻¹² S/m, preferably of about 10⁻¹⁵ S/m, preferably measured according to the standard ISO 62631-3.

8. Electrically insulating composite material (**1** according to any one of the preceding claims having a glass transition temperature Tg comprised between 70 °C and 160 °C, preferably between 100 °C and 130 °C.

9. Electrically insulating support (**9** made of an electrically insulating composite material (**1**) according to any one of the preceding claims.

10. Metal-enclosed substation (**5** including an outer shell (**6** internally delimiting an enclosure (**7**) in which a high voltage electrical conductor (**8**) is mounted using electrically insulating supports (**9**) according to claim 9.

11. Metal-enclosed substation (**5** according to claim 10 being a high voltage and direct current substation.

12. Method for manufacturing an electrically insulating composite material (**1**) according to any one of claims 1 to 8 comprising the following steps:
a) preparation of a crosslinkable mixture comprising an epoxy prepolymer of cycloaliphatic type or of diglycidylether type, one or several micrometric and/or mesometric filler(s) (**3**), at least one ionic liquid (**4**), and optionally a crosslinking agent distinct from the ionic liquid(s),
b) introduction of said crosslinkable mixture into a mold, and
c) crosslinking of the crosslinkable mixture located in the mold.

13. Method according to claim 12, wherein the crosslinkable mixture has a viscosity ranging from 6,000 mPa.s to 15,000 mPa.s, preferably from 10,000 mPa.s to 12,000 mPas, preferably measured at 80 °C according to the standard ISO 12058.

14. Method according to claim 12 or 13, wherein the crosslinkable mixture comprises a crosslinking agent distinct from the ionic liquid(s) selected from an activated hardener, or a mixture containing a hardener and an initiator, or a combination of a hardener and an initiator, the hardener preferably being selected from the hardeners of amine or anhydride type.

15. Method according to claim 12 or 13, wherein the crosslinkable mixture does not comprise a crosslinking agent distinct from the ionic liquid(s).

16. Method according to any one of claims 12 to 15, wherein the crosslinking is achieved by application of a crosslinking means, such as heating or UV.
